# EUROPEAN PATENT SPECIFICATION

(11) **EP 3 662 405 B1**
(45) Date of publication and mention of the grant of the patent: **07.06.2023**
(21) Application number: 17809358.9
(22) Date of filing: 01.12.2017
(51) Int. Cl.: G06K 7/10

(54) **DEVICE FOR READING BARCODES**
VORRICHTUNG ZUM LESEN VON STRICHCODES
DISPOSITIF DE LECTURE DE CODES À BARRES

(30) Priority: 02.08.2017 GB 201712421
(43) Date of publication of application: 10.06.2020
(73) Proprietor: Ziath Ltd, Cambridge, Cambridgeshire CB22 3HB (GB)
(72) Inventor: DILKS, Ekaterina, Cambridge, Cambridgeshire CB22 3HB (GB)
(74) Representative: Marks & Clerk LLP
(86) International application number: PCT/GB2017/053631
(87) International publication number: WO 2019/025747

(56) References cited:
- EP-A2- 2 682 756
- WO-A2-2005/038705
- US-A- 5 907 411
- US-A1- 2010 046 041

## Description

### FIELD OF THE INVENTION

This invention relates to an image capture device for imaging barcodes located on containers/tubes held in racks and to related methods.

### BACKGROUND TO THE INVENTION

Automated and robotic systems are widely used in research and analysis laboratories in the pharmaceutical, biotechnology and veterinary industries, where large numbers of biological samples such as blood and other human/animal fluids, biological drug candidates or small molecule libraries in powder or liquid form are handled.

Increasingly, samples are contained within test tubes or vials that are labelled with unique 2D barcodes generally placed on the base of the tube in order to identify each individual sample. The barcode acts as an identifier to allow a researcher to access information about the sample from a file or database with ease.

Such tubes are commonly held in racks that allow samples to be easily transported and enable the barcodes on the base of the tubes to be read. In automated systems, machine vision is used to capture images of the base of a rack and analyse the images to determine the barcode on each tube. In any machine vision application, the quality of the image that is captured is vital to the success of the resulting analysis.

In order to capture an image, an image capture device is required. Known image capture devices contain an image sensor or sensors which may for example be a charged couple device (CCD) or complementary metal-oxide-semiconductor (CMOS) device.

In a camera based device one or more CCD or CMOS image sensors are fixed within the device.

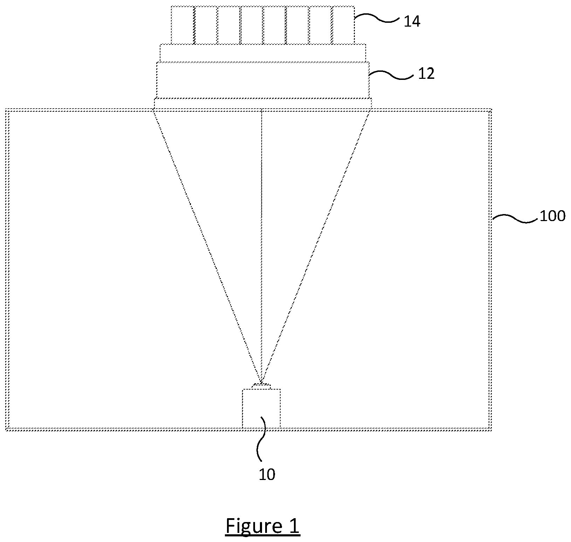

Figure 1 illustrates a known image capture device 100 which uses a single camera 10 to obtain an image of a whole rack (12) holding sample test tubes labelled with barcodes (14).

US2010046041 discloses a scanning apparatus which includes a flatbed scanning portion and a scanning module. The flatbed scanning portion includes a glass platform. The scanning module includes a scanning module case, a light source, multiple reflective mirrors, a lens, an optical sensing element, a printed circuit board and a metallic post. The metallic post is interconnected between the scanning module case and the printed circuit board. The printed circuit board is not in direct contact with the scanning module case so as to prevent defocus aberration resulting from thermal expansion.

EP2682756 A2 represents the basis for the preamble of claim 1 and discloses an image capture device for capturing an image of barcodes of a plurality of test tubes held in a test tube rack.

### SUMMARY OF THE INVENTION

The height of the single camera imaging devices can be problematic for use with some automated robotic systems that have limited range of vertical arm movement. The height of the imaging device can be reduced using multiple cameras, where the resulting image is a composite of several images taken from a closer distance; however this solution increases complexity and cost of the imaging device.

In the present invention there is provided an image capture device for capturing an image of a test tube rack comprising a plurality of test tubes each having an individual barcode thereon, the image capture device comprising: an enclosure comprising a transparent window which, in use, is adjacent to the test tube rack to be imaged; at least one camera mounted within the enclosure to capture an image of the test tube rack; a lighting arrangement mounted within the enclosure, the lighting arrangement comprising at least one light source to illuminate the test tube rack through the transparent window; a mirror in an optical path between the at least one camera and the transparent window, the mirror arranged to relay light rays reflecting from the test tube rack to the at least one camera; and an interface for outputting the captured image to a host computer.

In particular, there is provided an image capture device for capturing an image of barcodes of a plurality of test tubes held in a test tube rack, the plurality of test tubes each having an individual barcode thereon, the image capture device comprising: an enclosure comprising a transparent window which, in use, is adjacent to the test tube rack to be imaged; and a plurality of stationary components, the plurality of stationary components comprising: at least one camera mounted within the enclosure to capture an image of the barcodes; a lighting arrangement mounted within the enclosure, the lighting arrangement comprising at least one light source to illuminate the barcodes of the plurality of test tubes held in the test tube rack through the transparent window; a mirror in an optical path between the at least one camera and the transparent window, the mirror arranged to relay light rays reflecting from the barcodes of the plurality of test tubes held in the test tube rack to the at least one camera; and an interface for outputting the captured image to a host computer for decoding of said barcodes.

The lighting arrangement may be mounted within the enclosure to provide generally uniform illumination across the whole transparent window and to reduce unwanted reflections.

The barcodes may be positioned on the bases of the tubes (e.g. at the closed ends of the test tubes) or on the top of the tubes (for example on an outer surface of caps which seal the open ends of the tubes).

Use of the mirror inside the enclosure enables the camera to capture an image from the same distance as the known image capture device 100 (it will be a mirror image in the case of a single mirror) without the image suffering from any distortion, and the height of the image capture device can be made significantly smaller than the known image capture device 10.

The mirror may be a first surface mirror.

The mirror may be mounted within the enclosure at an angle that is equal to, or greater than 10 degrees relative to the transparent window and less than, or equal to 65 degrees relative to the transparent window.

In one embodiment, the mirror is mounted within the enclosure at an angle of 45 degrees relative to the transparent window. In another embodiment, the mirror is mounted within the enclosure at an angle that is greater than 45 degrees and less than or equal to 65 degrees relative to the transparent window. In yet another embodiment, the mirror is mounted within the enclosure at an angle that is greater than or equal to10 degrees and less than 45 degrees relative to the transparent window.

The mirror may be mounted to one or any combination of: a base of the enclosure, a side wall of the enclosure, and a portion of a top of the enclosure which surrounds the transparent window.

The at least one camera may be positioned lower than a height of the transparent window.

The at least one camera may be mounted to one or any combination of: a base of the enclosure, a side wall of the enclosure, and a portion of a top of the enclosure which surrounds the transparent window.

The enclosure may comprise a portion which extends vertically above a height of the transparent window and the at least one camera is mounted within said portion such that the at least one camera is positioned higher than the height of the transparent window.

The image capture device may further comprise at least one further stationary mirror in the optical path between the at least one camera and the transparent window, the at least one further stationary mirror in combination with said mirror arranged to relay light rays reflecting from the test tube rack to the at least one camera.

The at least one further stationary mirror may be a first surface mirror.

Typically, the rack of tubes will be placed on top of the window and an image of the base of rack of tubes will be captured. However, it will be appreciated that other arrangements are also possible, for example, if the barcodes are placed on the top of the tubes, the image capture device may be supported with its window above the tube rack.

In embodiments, the lighting arrangement is mounted within the enclosure to provide generally uniform illumination across the whole transparent window and to reduce unwanted reflections.

It will be appreciated that by providing generally uniform illumination across the window, i.e. across the whole surface of the window, the barcodes of the plurality of test tubes held in the rack placed in contact or close proximity with the window will also be uniformly illuminated. By generally uniform illumination it is meant that the illumination across the window is within a predefined range which is suitable for the dynamic range of the camera and optics being used. Alternatively, generally uniform illumination may be defined as providing illumination that varies by no more than approximately 20% from a maximum illumination. This enables high quality images to be captured and transferred to a host computer in order to decode barcodes present in the images.

When a tube rack is placed in contact or in close proximity with or the window, the barcodes of the plurality of test tubes held in the tube rack will reflect light back to the at least one camera. The nature of the reflection will depend on the material of the base of the tubes . For example, if the base surface of the tubes within a rack is generally matte, incoming light is reflected in a broad range of directions, i.e. there is diffuse reflection. By contrast, if the base surface of the tubes within a rack is generally glossy, there is will a mixture of diffuse reflection and specular reflection. Specular reflection is the mirror-like reflection of light in which the angle of incidence is equal to the angle of reflection. Reflection, in particular specular reflection where the light is directed straight back at the camera, is problematic for barcode reading as it can cause both the background material and the barcode to appear washed out, destroying the contrast that is required in order to read the barcode.

Accordingly, the at least one light source needs to be positioned so that the angle of the light rays from it minimises reflections that may reduce the contrast of the barcodes on the test tubes.

The direct reflection of the light from the mirror also needs to be avoided, which restricts the number of possible configurations for the light source(s).

The optimal lighting avoids undesirable reflections whilst achieving a reasonably even illumination across the transparent window.

In some embodiments, the at least one light source directly illuminates the transparent window.

The enclosure comprises a pair of opposed end walls and the at least one light source may be mounted adjacent to at least one end wall.

A plurality of light sources may be symmetrically placed within the enclosure with light sources mounted adjacent to both end walls.

The image capture device may further comprise at least one light blocking element arranged to block a subset of light ray angles radiating from the at least one light source.

The lighting arrangement may comprise: a plurality of light sources comprising a first set of light sources and a second set of light sources mounted within the enclosure to directly illuminate the window, and at least one light blocking element arranged to block a subset of light ray angles radiating from only one of the first and second set of light sources.

The first set of light sources may illuminate a first section of the transparent window and the second set of light sources may illuminate a second section of the transparent window and the first and second sections at least partially overlap to provide overlap regions.

Each of the first and second set of light sources may comprise at least one array of light sources.

The first set of light sources and the second set of light sources may be mounted at different angles relative to each other.

Individual light sources may emit light of different intensity to achieve generally uniform illumination of the sample rack.

In some embodiments, the at least one light source indirectly illuminates the transparent window.

The mirror may be arranged to reflect light emitted by the at least one light source towards the transparent window.

At least one further mirror may be arranged to reflect light emitted by the at least one light source towards the transparent window.

The at least one camera may have a resolution of at least 5 megapixels.

The at least one camera may be a CCD camera or a CMOS camera.

The transparent window may have dimensions which are approximately equal to dimensions of the test tube rack to be placed on the image capture device.

The image capture device may further comprise a plurality of positioning elements to assist in correct positioning of the test tube rack on the transparent window.

The image capture device may further comprise a controller which is configured to control capture of an image of the test tube rack placed on the image capture device.

The controller may be mounted on a printed circuit board, the printed circuit board housed within the enclosure behind the mirror.

The controller may be configured to receive a command to capture an image from the host computer via the interface.

The controller may be configured to: increase the light intensity of light emitted by the at least one light source; control the at least one camera to capture an image of the test tube rack; decrease the light intensity of light emitted by the at least one light source; and transmit, via said interface, the captured image of the test tube rack to the host computer.

The controller is configured to control the light intensity of light emitted by the at least one light source to provide generally uniform illumination across the whole transparent window.

A computer program may be provided for the host computer to send commands to the imaging device and to decode the barcodes in the resulting image.

The image capture device is designed to work with multiple racks available on the market, which includes various contrasts and colours of the printing of the barcodes and various surfaces of the tubes - from matte to glossy.

According to another aspect of the present invention there is provided a system comprising: an image capture device for capturing an image of barcodes of a plurality of test tubes held in a test tube rack, the plurality of test tubes each having an individual barcode thereon; and a host computer coupled to the image capture device; wherein the image capture device comprises: an enclosure comprising a transparent window which, in use, is adjacent to the test tube rack to be imaged; and a plurality of stationary components, the plurality of stationary components comprising: at least one camera mounted within the enclosure to capture an image of the barcodes; a lighting arrangement mounted within the enclosure, the lighting arrangement comprising at least one light source to illuminate the barcodes of the plurality of test tubes held in the test tube rack through the transparent window; a mirror in an optical path between the at least one camera and the transparent window, the mirror arranged to relay light rays reflecting from the barcodes of the plurality of test tubes held in the test tube rack to the at least one camera; and an interface for outputting the captured image to a host computer for decoding of said barcodes.

The invention further provides processor control code to implement the image capture system described above, for example on an embedded processor. The code may be provided on a carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language. As the skilled person will appreciate such code and/or data may be distributed between a plurality of coupled components in communication with one another.

These and other aspects will be apparent from the embodiments described in the following. The scope of the present disclosure is not intended to be limited by this summary nor to implementations that necessarily solve any or all of the disadvantages noted.

### BRIEF DESCRIPTION OF THE DRAWINGS

For a better understanding of the present disclosure and to show how embodiments may be put into effect, reference is made to the accompanying drawings in which:
Figure 1 illustrates a known image capture device;
Figure 2 illustrates an image capture device in accordance with embodiments of the invention referencing only some of the components;
Figure 3a shows the base of a typical tube rack;

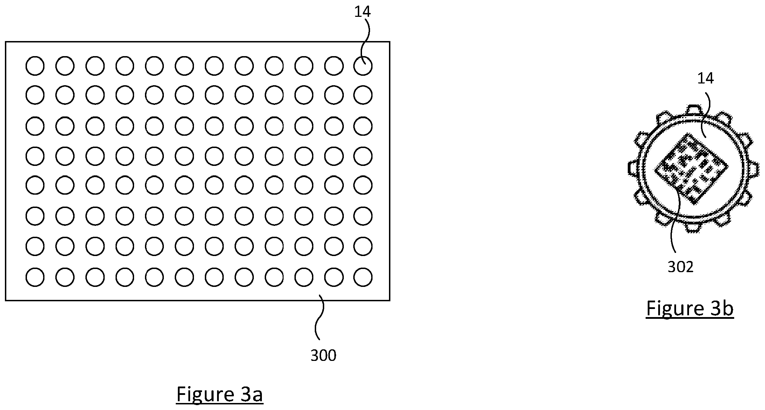

Figure 3bshows the base of a tube labelled with a barcode;

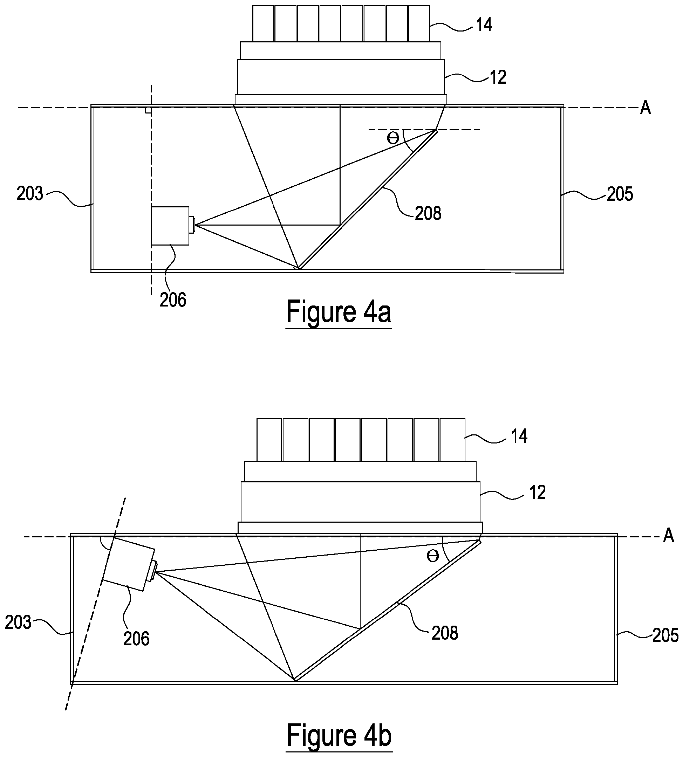

Figures 4a and 4b show differing positions of a camera and a mirror in the image capture device;

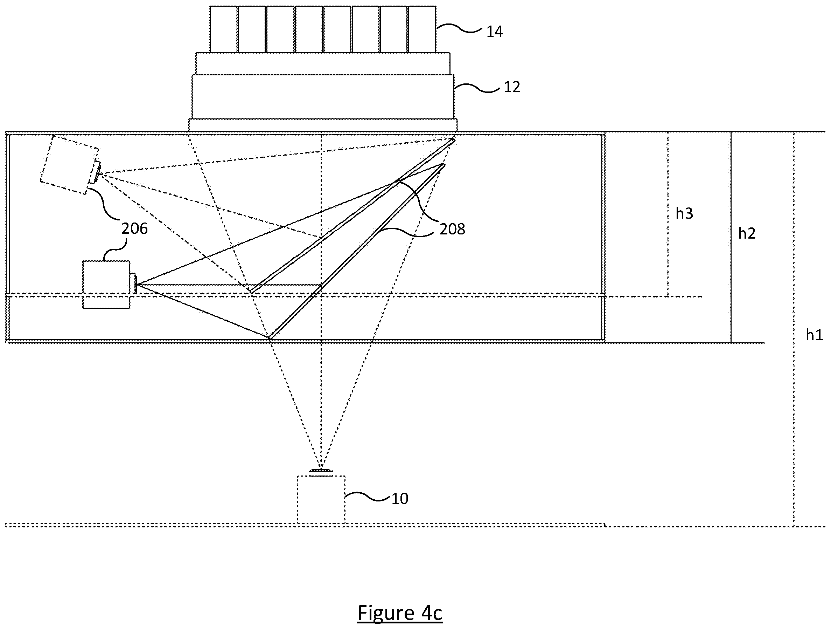

Figure 4c illustrates the height reduction of an image capture device achieved with embodiments of the invention;

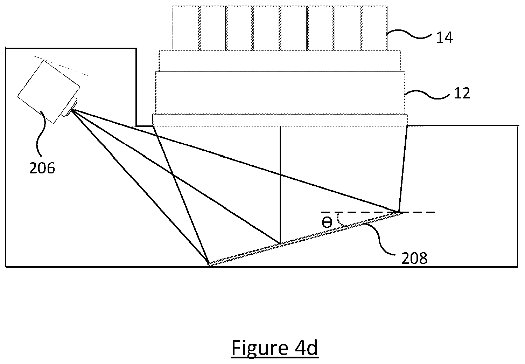

Figure 4d shows the location of a camera and a mirror in the image capture device according to an alternative embodiment;

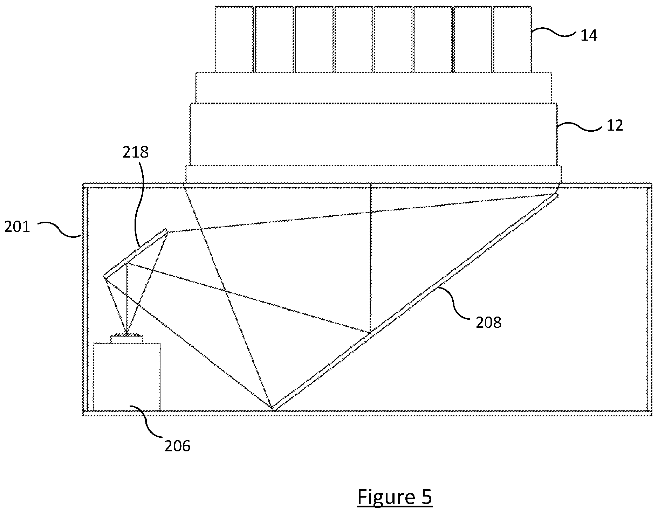

Figure 5 shows an image capture device in accordance with embodiments of the invention having multiple mirrors;

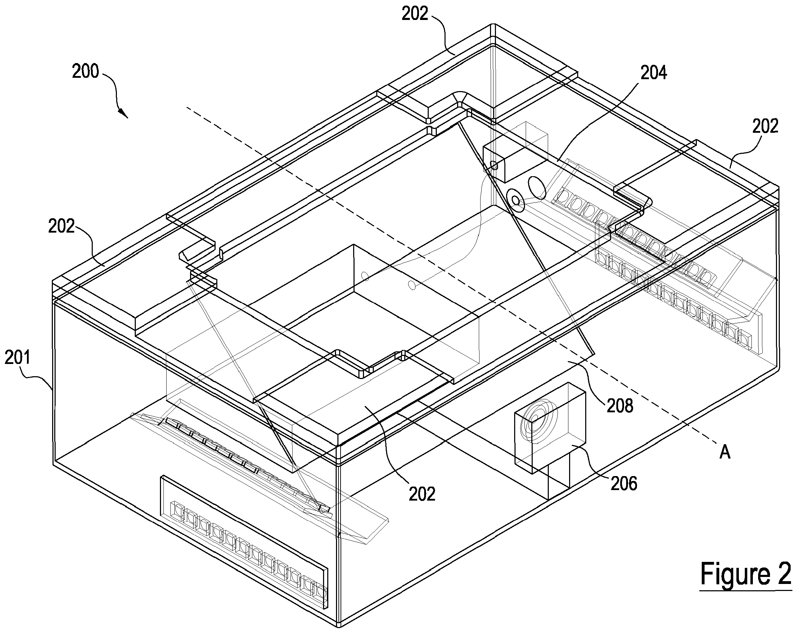

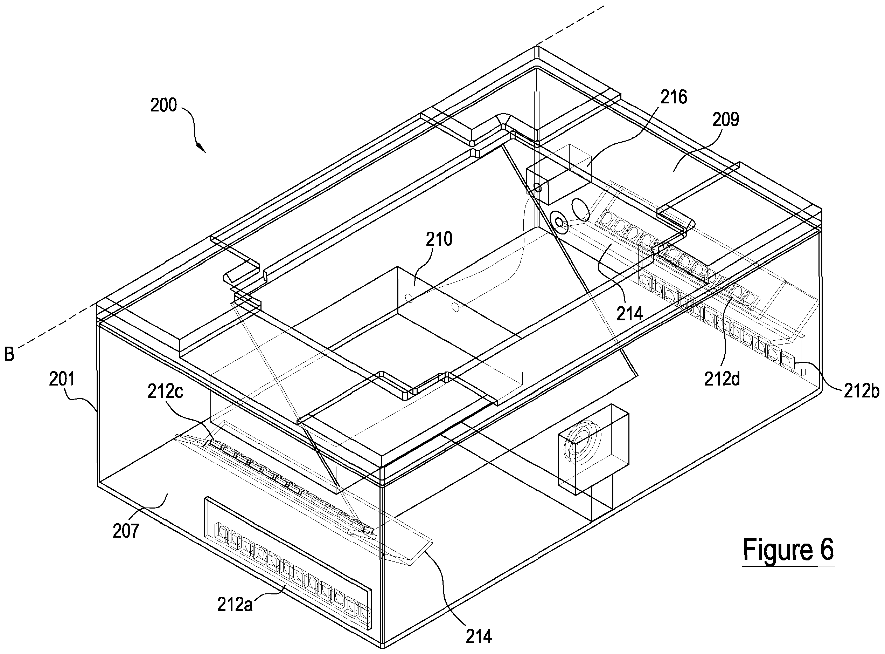

Figure 6 illustrates the image capture device in accordance with embodiments of the invention referencing other components than in Figure 2;

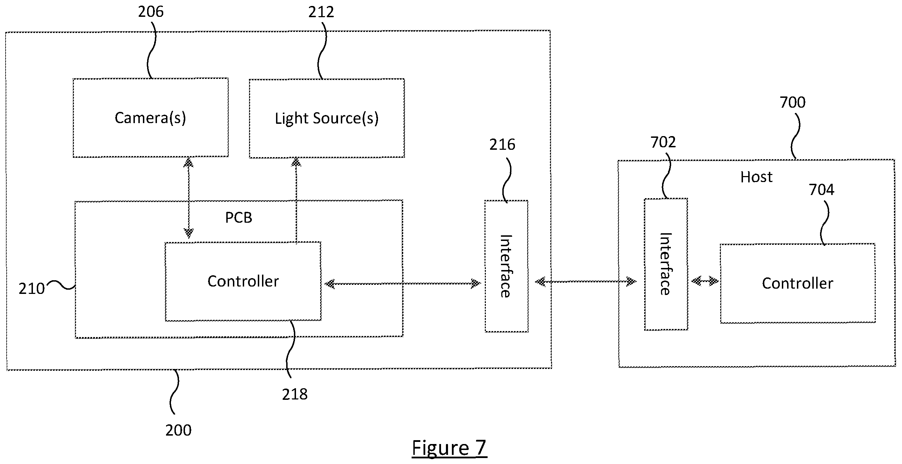

Figure 7 is a schematic block diagram of the image capture device and a host computer coupled to the image capture device; and

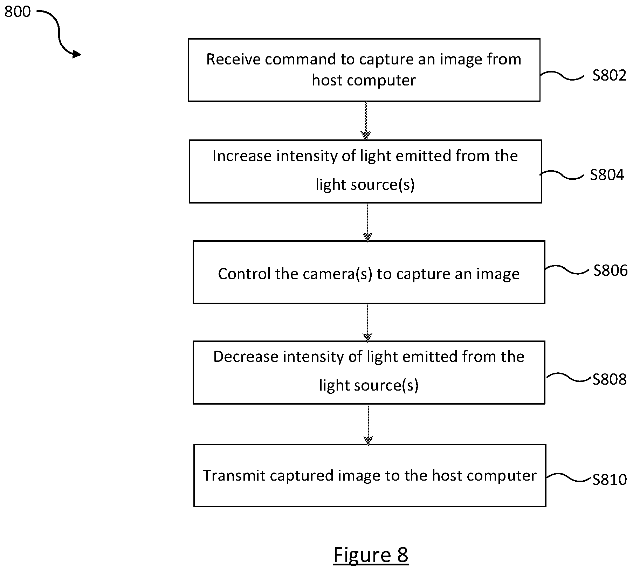

Figure 8 shows a flowchart of a process performed by a controller of the image capture device.

### DETAILED DESCRIPTION

Embodiments will now be described by way of example only.

Figure 2 show an image capture device 200 according to the present invention. The image capture device 200 comprises an enclosure 201 having side walls, a base and a top (the base of the enclosure opposing the top). The top has a window 204 with dimensions (width and length) which generally match (i.e. is approximately equal to) those of a test tube rack to be placed on the device. In this embodiment, the enclosure has the form of a generally rectangular box. It will be appreciated that other shapes of enclosure may be used provided the device is suitable for capturing an image of a test tube rack placed thereon.

The image capture device 200 may comprise tube rack positioning elements 202 to correctly position a tube rack on the device,

The enclosure 201 houses a camera 206. Whilst Figure 2 shows a single camera, more than one camera may be housed within the enclosure. The camera(s) 206 has a resolution of at least 5 megapixels. The enclosure 201 further houses a mirror 208. Whilst Figure 2 shows a single mirror, more than one mirror may be housed within the enclosure (described in more detail later). The mirror 208 may be a first surface mirror (otherwise known as a front surface mirror), which avoids added reflections that would otherwise be created from the glass surface of a conventional second surface mirror.

As will be apparent from Figure 2, the mirror 208 is in an optical path between the camera 206 and the transparent window 204, the mirror 208 being arranged to reflect light (which is reflected from the underside of the test tube rack) into the field of view of the camera 206. As will be described in more detail below, the mirror 208 enables the height of the image capture device 200 to be reduced whilst retaining the ability of the camera to obtain high quality images of barcodes of a plurality of test tubes held in the test tube rack so that the barcodes on each tube may be decoded. In operation the camera 206 captures a single image of all of the barcodes of the plurality of test tubes held in the test tube rack.

The enclosure 201 also houses a lighting arrangement; the lighting arrangement comprises at least one light source to illuminate test tube rack through the transparent window 204 in a generally uniform manner and to reduce unwanted reflections. When activated, the light source(s) illuminate the whole area of the transparent window. The lighting arrangement can be implemented in various ways which will be discussed in further detail later.

The walls and base of the enclosure 201 are non-transparent in order to block out light from external sources. The top of the enclosure or at least the window 16 is transparent so that barcodes of a plurality of test tubes held in a test tube rack placed on the top of the device can be illuminated by the light sources and imaged by the camera 206 within the device.

As illustrated in Figure 2, the image capture device 200 has no moving parts within the enclosure 201, all components housed within the enclosure are stationary (non-moveable components). That is, the camera 206, mirror 208 and light sources are stationary (do not move in operation) due to being fixed inside the enclosure by way of suitable mounting.

Figures 3a shows the base 300 of a typical tube rack (in this case, a 96 tube rack), which is the object to be captured by the image capture device 200. In Figure 3a each circle indicates the position of a tube in the rack, and the base of each tube 14 is labelled with a barcode 302 (2D or otherwise), as shown in Figure 3b, which uniquely identifies the sample contained in each tube. It should be noted that embodiments extend to imaging barcodes which are placed on the top of the tubes (when the image capture device is supported with its window above the tube rack). Embodiments are not limited to an image capturing device for capturing an image of a 96 tube rack and can extend to capturing an image of any size test tube rack which holds a plurality of test tubes.

We first describe possible arrangements of the camera 206 and the mirror 208 in the enclosure 201 that can achieve a mirror image of an image captured by the camera 10 of Figure 1 which is positioned centrally below the rack, and also reduce the height of the enclosure. The mirror image is of the same size as the image captured by the camera 10 of Figure 1.

In embodiments, the mirror 208 may be mounted within the enclosure 201 by a suitable fixing to one or more of: the base of the enclosure, a long side wall 205 of the enclosure and a portion of the top of the enclosure which surrounds the transparent window 204.

Similarly, in embodiments the camera 206 may be mounted within the enclosure 201 by a suitable fixing to one or more of: the base of the enclosure, a long side wall 203 of the enclosure (opposing the long side wall 205 onto which the mirror 208 may be mounted) and a portion of the top of the enclosure which surrounds the transparent window 204

Figure 4a is a side view of a first arrangement in which the mirror 208 is positioned at an angle, Θ of 45 degrees relative to a plane of the window 204 (plane A across the width of the window 204) e.g. relative to the rack 12, and the camera 206 is positioned so that the angle of reflection of the light reflected from the test tube rack is 90 degrees.

As shown in Figure 4a, in this arrangement the camera 206 is mounted such that the rear surface of the body of the camera 206 is parallel to the long side wall 203 of the enclosure (and may indeed be mounted to the long side wall 203) and the mirror 208 is in the field of view of the camera 206.

In the arrangement of Figure 4a, the camera 206 is at a 90 degree angle relative to a plane (plane A) of the window 204 so that the camera 206 captures an image which is a mirror image of an image captured by the known image capture device 100 shown in Figure 1.

In embodiments, the enclosure 201 houses a printed circuit board (PCB) which includes a controller for controlling the light source(s) and the camera 206. The PCB may be positioned behind the mirror 208 such that the PCB is positioned directly below the sloping underside of the mirror 208.

With the mirror 208 positioned at an angle, Θ of 45 degrees, the height of the image capture device 200 can be reduced to below 85mm (this is approximately equal to the width of a 96 well test tube rack manufactured under the specifications of the industry standard defined by the Society for Biomolecular Screening (SBS)).

In other embodiments, the mirror 208 is mounted within the enclosure at an angle, Θ relative to a plane (plane A) of the window 204 that is greater than 45 degrees and less than or equal to 65 degrees relative to the transparent window 204, and the camera 206 is positioned so that the angle of the light reflected from the test tube rack is greater than 90 degrees. Whilst in these other embodiments the height of the image capture device 200 will be higher than the arrangement shown in Figure 4a, the height of the image capture device 200 is still lower than the height of the known image capture device 100 shown in Figure 1. In order for the camera 206 to capture an image equivalent to an image captured by the known image capture device 100 shown in Figure 1, the camera 206 is tilted such that it is angled (at an angle greater than 90 degrees) relative to a plane (plane A) of the window 204 with the mirror 208 in the field of view of the camera 206.

Figure 4b is a side view of a second arrangement in which the mirror 208 is positioned at an angle, Θ that is equal to, or greater than 10 degrees and less than 45 degrees relative to a plane of the window 204 (plane A across the width of the window 204) and the camera 206 is positioned so that the angle of reflection of the light reflected from the test tube rack is less than 90 degrees.

In order for the camera 206 to capture an image equivalent to an image captured by the known image capture device 100 shown in Figure 1, the camera 206 is tilted such that it is angled (at an angle less than 90 degrees) relative to a plane (plane A) of the window 204. The arrangement shown in Figure 4b is advantageous is that the height of the image capture device 200 is further reduced compared with the arrangement shown in Figure 4a.

Figure 4c illustrates the height reduction which can be achieved using the arrangements shown in Figure 4a and Figure 4b.

The height of the known image capture device 100 which shown in Figure 1 is h1. A shown in Figure 4c, by using the arrangement shown in Figure 4a the height of the image capture device 200 is h2, where h2<h1, and by using the arrangement shown in Figure 4b the height of the image capture device 200 is h3, where h3<h2<h1.

Thus it has been shown that embodiments of the present invention reduce the height of the image capture device while using a single low-cost camera.

It will be appreciated that there are many combinations of the mirror and camera angles and positions that can achieve an image of the barcodes of the plurality of test tubes held in the rack equivalent to an image captured by the known image capture device 100 shown in Figure 1 having a camera positioned centrally below the rack, and the choice of a particular combination may depend on the desired size of the enclosure and on the other components of the image capture device, such as lighting. The arrangements described above are examples to illustrate the concept.

Whilst in the arrangements referred to above the camera 206 is positioned at a height which is lower than a height of the transparent window 204. In an alternative embodiment, which is illustrated in Figure 4d, the enclosure 201 comprises a portion which extends vertically above a height of the transparent window and the camera 206 is mounted within said portion such that the camera 206 is positioned at a height which is higher than the height of the transparent window 204. Expressed another way, the top of the enclosure 201 is not flat having a raised portion which houses the camera 206.

In this alternative embodiment the mirror 208 is positioned at an angle, Θ that is greater than 10 degrees and less than 45 degrees relative to a plane of the window 204 (plane A across the width of the window 204) and the camera 206 is positioned so that the angle of reflection of the light reflected from the test tube rack is less than 90 degrees. In order for the camera 206 to capture an image equivalent to an image captured by the known image capture device 100 shown in Figure 1, the camera 206 is tilted such that it is angled (at an angle less than 90 degrees) relative to a plane of the extended portion.

Whilst in the above described embodiments, a single mirror is in the optical path between the camera 206 and the transparent window 204, in other embodiments multiple stationary mirrors may be present in the optical path between the camera 206 and the transparent window 204 and the multiple stationary mirrors in combination are arranged to relay light signals reflecting from the test tube rack to the at least one camera.

Figure 5 is an example arrangement in which multiple stationary mirrors are present in the optical path between the camera 206 and the transparent window 204. In particular, a further stationary mirror 218 is provided so that an image of the barcodes of the plurality of test tubes 14 held in the test tube rack 12is reflected on the first stationary mirror 208, then reflected on the further stationary mirror 218, and then captured by the camera 206.

At least one further stationary mirror 218 may be provided. The further stationary mirror(s) 218 may be a first surface mirror.

As shown in Figure 5 the camera 206 may be mounted within the enclosure 201 so that the field of view of the camera is directed towards the top of the enclosure. In alternative arrangements, the camera 206 may be mounted within the enclosure 201 so that the field of view of the camera is directed towards the base of the enclosure.

In all of the above examples the path length of the optical path between the camera 206 and the transparent window 204 is the same and is equal to the path length of the optical path length between the camera 10 and the transparent window in the known image capture device 100 shown in Figure 1.

The use of multiple mirrors (such as the arrangement shown in Figure 5) is advantageous because it enables the width of the image capture device 200 to be reduced as well as the height. Note that in the arrangement of Figure 4b having the mirror at a more acute angle requires the width of the image capture device to be increased in order to keep the path length of the optical path between the camera 206 and the transparent window 204 the same as the path length of the optical path length between the camera 10 and the transparent window in the known image capture device 100 shown in Figure 1.

We now describe the lighting arrangement which is used to illuminate the test tube rack through the transparent window 204 in a generally uniform manner and to reduce unwanted reflections.

Light spreads out from a fixed light source at a rate that is inversely proportional to the square of the distance from the light source. Accordingly, the intensity of the light at the object being imaged is affected by the distance between the light source and the object being imaged. The key factors in maximising the quality of an image captured by the at least one camera 206 are:
a) An even illumination of the object;
b) The minimising of unwanted reflections from the object being illuminated;
c) no direct reflection from the mirror; and
d) The quality and dynamic range of the image sensor within the camera used.

In order to capture the best possible image for the particular application, imaging systems are generally pre-tuned or have user-configurable options that affect the amount of light captured by the sensor. These options include the optical size of the aperture and the exposure time. If the illumination is not evenly spread across the object there may be no single combination of exposure and aperture size that will result in a single image of high-enough quality. With high-dynamic range cameras this is less of a problem, but for a cost-effective CMOS camera the dynamic range may not be great enough. Accordingly, for a CMOS camera uneven illumination can result in total loss of contrast in over-exposed sections of the capture image and conversely total loss of contrast in under-exposed sections of the capture image. In addition, when lighting an object from the side, light rays reach the object from many different angles, which may potentially cause unwanted reflections.

The lighting arrangement can be implemented in various ways.

In some embodiments, the light source(s) of the lighting arrangement directly illuminate the test tube rack through the transparent window 204. That is, no mirror is used to reflect light emitted by the light source(s) towards the transparent window 204.

In one example implementation, at least one light source is mounted on at least one side wall of the enclosure. For example, at least one light source may be mounted on a short side wall 207 of the enclosure and optionally an additional at least one light source is mounted on the opposed short side wall 209 of the enclosure. Alternatively or additionally the at least one light source may be mounted to the base of the enclosure and/or a portion of the top of the enclosure which surrounds the transparent window 204.

As explained above, the lighting needs to be placed to minimise the direct (specular) reflections from the sample rack (as if the camera was positioned on the base of the enclosure facing the transparent window) and additionally adjusted so that there is no direct reflection from the mirror 208. This may be achieved merely by optimal positioning and angling of the light source(s) without any light blocking elements being housed within the enclosure. In other embodiments, light blocking elements may be housed within the enclosure.

To assist with reducing the reflective regions on the transparent window 204, one or more light blocking elements 214 may be housed within the enclosure 201 to block light from falling in these regions. In particular, the one or more light blocking elements 214 are arranged to block light rays which have an angle of incidence on the window 204 which is such that when the light ray is reflected in a single direction (specular reflection), the light is reflected directly back to the at least one camera 206.

A preferred lighting arrangement is shown in Figure 6. It will be appreciated that there are many lighting systems that reduce reflections that could be used to achieve a similar illumination result as the preferred lighting arrangement.

The lighting arrangement shown in Figure 6 provides even illumination of and controls the reflections from the object being imaged (the plurality of test tubes held in the rack) and from the mirror 208 by using a combination of multiple light sources and multiple light blocking elements which are optimally positioned within the enclosure. As shown in Figure 6, the image capture device 200 contains multiple light sources positioned along two facing walls of the device. A first set of light sources 212a,b comprises an array of LEDs 212a mounted towards the lower edge of a short side wall 207 and a second array 212b mounted in a similar position on the opposed short side wall 209. A second set of light sources 212c,d comprises a first array of LEDs 212c mounted towards the upper edge of a short side wall 207 and a second array 212d mounted in a similar position on the opposed short side wall 209. Each set of light sources comprises an array in the form of a single line of 12 LEDs although it will be appreciated that different numbers of light sources could be used.

White LEDs are used as these are a good general light source. However, other colour light sources may also be used in the cases where the use of different colours would improve the contrast of the resulting image. Also, emitters of illumination outside of visible spectrum can be employed, such as infrared light, or UV light (although this is often damaging for biological samples and generally not used if can be avoided).

As explained above, the light sources housed inside the enclosure 201 are stationary due to being fixed inside the enclosure by way of suitable mounting.

The difference in intensity is balanced by arranging the light sources to control regions of overlap, i.e. regions of the window which are illuminated by more than one light source. The overlap regions will therefore be a mixture of intensity of light from different sources which overall gives rise to uniform light illumination on the window.

Unwanted reflections and the extent of the overlap regions are controlled by the use of light blocking members 214 which restrict the light from the bright light sources 212a,b. Each blocking member 214 is in the form of a plate which extends generally perpendicular to the side wall of the enclosure. A blocking member 214 is mounted between the first set of light sources and the second set of light sources to prevent specular reflections from the first array of light sources.

Furthermore, the unwanted reflections and the extent of the overlap regions are controlled by appropriate angling of the light sources.

In embodiments, the light sources 212 may have the intensity and angles of the light emitted by the light sources 212 controlled electronically by the controller within the imaging device to help fine tune the illumination levels across the transparent window 204. This control may also be extended to the host computer, so the lighting may be adjusted based on the results of the image analysis.

In the example above, the same number of light sources is used in both the first and second light sources on each side of the enclosure but this is a parameter which could be adjusted to ensure uniform illumination.

Whilst embodiments have been described above in which the light source(s) of the lighting arrangement directly illuminate the test tube rack through the transparent window 204. In other embodiments, the light source(s) of the lighting arrangement indirectly illuminate the test tube rack through the transparent window 204 via one or more mirror. That is, one or more mirror is used to reflect light emitted by the light source(s) towards the transparent window 204.

In one embodiment, the mirror(s) arranged to relay light rays reflecting from the test tube rack to the at least one camera 206 are also used to reflect light emitted by the light source(s) towards the transparent window 204.

In an alternative embodiment, the mirror(s) used to reflect light emitted by the light source(s) towards the transparent window 204 are different to the mirror(s) arranged to relay light rays reflecting from the test tube rack to the at least one camera 206.

As discussed above, the enclosure 201 houses a printed circuit board (PCB) which includes a controller for controlling the light source(s) 212 and the camera 206. The PCB 210 is shown in Figure 6 positioned behind the mirror 208 such that the PCB 210 is positioned directly below the sloping underside of the mirror 208, however the PCB 210 may be positioned at other locations inside the enclosure 201.

To illustrate the connections between the PCB 210 and other components in the enclosure 201, reference is now made to Figure 7 which is a schematic block diagram of the image capture device 200 and a host computer 700 which is coupled to the image capture device 200. The host computer 700 being external to the image capture device 200.

As shown in Figure 7, a controller 218 is mounted on the PCB 210. It will be appreciated that other components will also be mounted on the PCB 210 but these have been omitted for simplicity.

The controller 218 is coupled to the camera 206 via a suitable connection which may be a wired or wireless connection. The controller 218 is configured to control the camera 206 to capture an image of the barcodes of the plurality of test tubes held in test tube rack 12, and receive an image back from the camera 206 using this connection.

The controller 218 is coupled to the light source(s) 212 via a suitable connection which may be a wired or wireless connection. The controller 218 is configured to control the intensity of light emitted by the light source(s) 212 using this connection.

As shown in Figure 7, the image capture device 200 is coupled to the host computer 700 via an interface 216. The interface 216 is fixed within the enclosure 201. Whilst Figure 6 shows the interface 216 on a side wall of the enclosure 201, it will be appreciated that the interface may be located on the base of the enclosure or on a portion of the top of the enclosure which surrounds the transparent window 204.

The controller 218 is coupled to the interface 216 and is configured to receive commands, transmitted from the host computer 700, via the interface 216. The controller 218 is further configured to transmit the image, received from the camera 206, to the host computer 700 via the interface 216 for decoding of the barcodes in the captured image.

In some embodiments, the image capture device 200 is coupled to the host computer 700 via a wired link (e.g. USB cable, Ethernet cable, HDMI cable, DIN cable etc.) in which case the interface 216 is a wired interface. In other embodiments, the image capture device 200 is coupled to the host computer 700 via a wireless link (e.g. via a short-range RF technology such as Wi-Fi^{®}, ZigBee^{®} or Bluetooth^{®}) in which case the interface 216 is a wireless interface.

In use, the image capture device 200 is connected to the host computer 700 and is initialised by a user opening and running an associated imaging software application running on a controller 704 of the host computer 700.

The controller 704 is configured to send commands to the image capture device 200 via an interface 702 (wired or wireless) on the host computer 700. The controller 704 is further configured to receive image data, from the image capture device 200, via the interface 702.

The host computer 700 may be any computing device able to connect to the image capture device 200 for example a mobile phone, a personal computer ("PC"), a tablet computer, a laptop computer etc.

Reference is now made to Figure 8 which is a flow chart for a process 800 performed by the controller 218 of the image capture device 200.

At step S802, the controller 218 receives, via the interface 216, a command from the host computer 700 to capture an image of the test tube rack 12.

In response to receiving the command, at step S804 the controller 218 controls the light source(s) so that the light emitted from the light source(s) is increased. Step S804 may comprise the controller 218 turning the light source(s) on. Alternatively, step S804 may comprise the controller 218 increasing the light emitted from the light source(s) from a first illumination level (corresponding to when light is emitted from the light source(s)) to a higher second illumination level.

Once the test tube rack is illuminated through the transparent window 204 by the light source(s), at step S806 the controller 218 controls the camera 206 to capture a single image of the barcodes of the plurality of test tubes held in the test tube rack 12 and in response receives image data of the captured image back from the camera 206.

In operation, the light source(s) illuminate the whole area of the transparent window throughout the duration of a predetermined time period, and during this time period the controller 218 controls the camera 206 to capture the image.

At step S808, the controller 218 controls the light source(s) so that the light emitted from the light source(s) is decreased. Step S808 may comprise the controller 218 turning the light source(s) off. Alternatively, step S808 may comprise the controller 218 decreasing the light emitted from the light source(s) from a second illumination level to a lower first illumination level (corresponding to when light is emitted from the light source(s)).

By controlling the light source(s) to only emit light at an illumination level to provide the necessary illumination of the transparent window for a short period of time whilst the image of the barcodes of the plurality of test tubes held in test tube rack 12 is captured, this advantageously protects light sensitive samples in the test tubes from unnecessary exposure to light and also to protect the eyes of the users operating the image capture device 200 from the bright light source(s) when the rack is not in place. Furthermore this reduces power consumption of the image capture device, extends the operating life of the light source(s), and avoids overheating of the image capture device.

At step S810, the controller 218 transmits the image data, received from the camera 206, to the host computer 700 via the interface 216.

The imaging software application running on the controller 704 of the host computer 700 receives the image data and performs image processing to decode the barcodes in the captured image.

Depending on the mirror configuration used in the enclosure 201, it may be necessary for the imaging software application to flip the received image horizontally (in the case of a single mirror being used to relay light rays reflecting from the test tube rack to the camera 206) so that the resulting image corresponds to that which would be captured using the known image capture device 100. The flipping of the captured image may alternatively be carried out on the image capture device e.g. by the camera 206 or controller 218.

The controller 218 may be implemented in code (software and/or firmware) stored on a memory (not shown in the figure) comprising one or more storage media, and arranged for execution on a processor comprising on or more processing units. The code is configured so as when fetched from the memory and executed on the processor to perform operations in line with embodiments discussed above. Alternatively it is not excluded that some or all of the functionality of the controller 218is implemented in dedicated hardware circuitry, or configurable hardware circuitry like an FPGA.

The steps shown separately in Figure 8 may or may not be implemented as separate steps, and may or may not be implemented in the order shown.

While this invention has been particularly shown and described with reference to preferred embodiments, it will be understood to those skilled in the art that various changes in form and detail may be made without departing from the scope of the invention as defined by the appendant claims.

## Claims

1. An image capture device (200) for capturing an image of barcodes of a plurality of test tubes (14) held in a test tube rack (12), the plurality of test tubes each having an individual barcode (302) thereon, the image capture device comprising:
an enclosure (201) comprising a transparent window (204) for supporting the test tube rack to be imaged; and
a plurality of stationary non-movable components, the plurality of stationary non-movable components comprising:
at least one camera (206) mounted within the enclosure for capturing an image of the barcodes;
a lighting arrangement mounted within the enclosure, the lighting arrangement comprising at least one light source (212) for illuminating the barcodes of the plurality of test tubes held in the test tube rack through the transparent window;
an interface (216) for outputting the captured image to a host computer (700);
**characterized by**
a mirror (208) in an optical path between the at least one camera and the transparent window, the mirror for relaying light rays reflecting from the barcodes of the plurality of test tubes held in the test tube rack to the at least one camera.

2. An image capture device according to claim 1, wherein the mirror is mounted within the enclosure at an angle that is equal to, or greater than 10 degrees relative to the transparent window and less than, or equal to 65 degrees relative to the transparent window,
optionally wherein the mirror is mounted within the enclosure at an angle of 45 degrees relative to the transparent window.

3. An image capture device according to claim 1, wherein the mirror is mounted within the enclosure at an angle that is greater than 45 degrees and less than, or equal to, 65 degrees relative to the transparent window.

4. An image capture device according to claim 1, wherein the mirror is mounted within the enclosure at an angle that is equal to, or greater than 10 degrees and less than 45 degrees relative to the transparent window.

5. An image capture device according to any preceding claim wherein the at least one camera is positioned lower than a height of the transparent window, wherein preferably the at least one camera is mounted to one or any combination of: a base of the enclosure, a side wall of the enclosure, and a portion of a top of the enclosure which surrounds the transparent window.

6. An image capture device according to any preceding claim, wherein the image capture device further comprises at least one further stationary mirror (218) in the optical path between the at least one camera and the transparent window, the at least one further stationary mirror in combination with said mirror arranged to relay light rays reflecting from the test tube rack to the at least one camera.

7. An image capture device according to any preceding claim, wherein the lighting arrangement is mounted within the enclosure to provide generally uniform illumination across the whole transparent window and to reduce unwanted reflections.

8. An image capture device according to any preceding claim, wherein the enclosure comprises a pair of opposed end walls (207,209) and the at least one light source is mounted adjacent to at least one end wall, wherein preferably a plurality of light sources are symmetrically placed within the enclosure with light sources mounted adjacent to both end walls.

9. An image capture device according to any preceding claim, wherein the image capture device further comprises at least one light blocking element (214) arranged to block a subset of light ray angles radiating from the at least one light source.

10. An image capture device according to any of claims 1 to 7, wherein the lighting arrangement comprises:
a plurality of light sources comprising a first set of light sources and a second set of light sources mounted within the enclosure to directly illuminate the window, and
at least one light blocking element arranged to block a subset of light ray angles radiating from only one of the first and second set of light sources;
wherein preferably the first set of light sources illuminates a first section of the transparent window and the second set of light sources illuminates a second section of the transparent window and the first and second sections at least partially overlap to provide overlap regions.

11. An image capture device according to any of claims 1 to 10, wherein the at least one light source indirectly illuminates the transparent window.

12. An image capture device according to any preceding claim, wherein the at least one camera has a resolution of at least 5 megapixels.

13. An image capture device according to any preceding claim, further comprising a controller (218) which is configured to control capture of an image of the test tube rack placed on the image capture device, wherein the controller is preferably configured to:
increase the light intensity of light emitted by the at least one light source;
control the at least one camera to capture an image of the test tube rack;
decrease the light intensity of light emitted by the at least one light source; and
transmit, via said interface, the captured image of the test tube rack to the host computer.

14. An image capture device according to any preceding claim, wherein the mirror is a first surface mirror.

15. A system comprising:
an image capture device according to any preceding claim; and
a host computer (700) coupled to the image capture device.

## Patentansprüche

1. Bilderfassungsvorrichtung (200) zum Erfassen eines Bildes eines Barcodes einer Vielzahl von in einem Reagenzglasgestell (12) gehaltenen Reagenzgläsern (14), wobei die Vielzahl von Reagenzgläsern jeweils einen individuellen Barcode (302) darauf aufweist, wobei die Bilderfassungsvorrichtung Folgendes umfasst:
ein Gehäuse (201), das eintransparentes Fenster (204) zum Stützen des abzubildenden Reagenzglasgestells umfasst, und
eine Vielzahl stationärer, nichtbeweglicher Komponenten, wobei die Vielzahl stationärer nichtbeweglicher Komponenten Folgendes umfasst:
mindestens eine innerhalb des Gehäuses angebrachte Kamera (206) zum Erfassen eines Bildes der Barcodes;
eine im Gehäuse montierte Beleuchtungsanordnung, wobei die Beleuchtungsanordnung mindestens eine Lichtquelle (212) zum Beleuchten der Barcodes der Vielzahl von in dem Reagenzglasgestell gehaltenen Reagenzgläser durch das transparente Fenster umfasst,
eine Schnittstelle (216) zur Ausgabe des erfassten Bildes an einen Host-Computer (700);
**gekennzeichnet durch**
einen Spiegel (208) in einem Strahlengang zwischen der mindestens einen Kamera und dem transparenten Fenster, wobei der Spiegel Lichtstrahlen, die von den Barcodes der Vielzahl von Reagenzgläsern reflektiert werden, die in dem Reagenzglasgestell gehalten werden, an die mindestens eine Kamera weiterleitet.

2. Bilderfassungsvorrichtung nach Anspruch 1, wobei der Spiegel innerhalb des Gehäuses in einem Winkel montiert ist, der gleich oder größer als 10 Grad in Bezug auf das transparente Fenster und kleiner oder gleich 65 Grad in Bezug auf das transparente Fenster ist,
wobei optionsweise der Spiegel innerhalb des Gehäuses in einem Winkel von 45 Grad in Bezug auf das transparente Fenster montiert ist.

3. Bilderfassungsvorrichtung nach Anspruch 1, wobei der Spiegel innerhalb des Gehäuses in einem Winkel montiert ist, der größer als 45 Grad und kleiner als oder gleich 65 Grad in Bezug auf das transparente Fenster ist.

4. Bilderfassungsvorrichtung nach Anspruch 1, wobei der Spiegel innerhalb des Gehäuses in einem Winkel montiert ist, der gleich oder größer als 10 Grad und kleiner als 45 Grad in Bezug auf das transparente Fenster ist.

5. Bilderfassungsvorrichtung nach einem der vorhergehenden Ansprüche, wobei die mindestens eine Kamera niedriger als eine Höhe des transparenten Fensters positioniert ist, wobei vorzugsweise die mindestens eine Kamera an einem oder einer beliebigen Kombination von Folgendem montiert ist: einer Basis des Gehäuses, einer Seitenwand des Gehäuses und einem Teil einer Oberseite des Gehäuses, welches das transparente Fenster umgibt.

6. Bilderfassungsvorrichtung nach einem der vorhergehenden Ansprüche, wobei die Bilderfassungsvorrichtung ferner mindestens einen weiteren stationären Spiegel (218) im Strahlengang zwischen der mindestens einen Kamera und dem transparenten Fenster umfasst, wobei der mindestens eine weitere stationäre Spiegel in Kombination mit dem Spiegel angeordnet ist, um vom Reagenzglasgestell reflektierte Lichtstrahlen an die mindestens eine Kamera weiterzuleiten.

7. Bilderfassungsvorrichtung nach einem der vorhergehenden Ansprüche, wobei die Beleuchtungsanordnung innerhalb des Gehäuses montiert ist, um eine im Allgemeinen gleichmäßige Beleuchtung über das gesamte transparente Fenster bereitzustellen und um unerwünschte Reflexionen zu reduzieren.

8. Bilderfassungsvorrichtung nach einem der vorhergehenden Ansprüche, wobei das Gehäuse ein Paar gegenüberliegender Endwände (207, 209) umfasst und die mindestens eine Lichtquelle angrenzend an mindestens eine Endwand montiert ist, wobei vorzugsweise eine Vielzahl von Lichtquellen symmetrisch innerhalb des Gehäuses angeordnet ist, wobei Lichtquellen angrenzend an beide Endwände montiert sind.

9. Bilderfassungsvorrichtung nach einem der vorhergehenden Ansprüche, wobei die Bilderfassungsvorrichtung ferner mindestens ein Lichtsperrelement (214) umfasst, das angeordnet ist, um eine Teilmenge von Lichtstrahlwinkeln zu sperren, die von der mindestens einen Lichtquelle ausgeht.

10. Bilderfassungsvorrichtung nach einem der Ansprüche 1 bis 7, wobei die Beleuchtungsanordnung Folgendes umfasst:
eine Vielzahl von Lichtquellen, die einen ersten Satzvon Lichtquellen und einem zweiten Satz von Lichtquellen umfassen, die innerhalb des Gehäuses montiert sind, um das Fenster direkt zu beleuchten, und
mindestens ein Lichtsperrelement, das angeordnet ist, um eine Teilmenge von Lichtstrahlwinkeln zu sperren, die nur von einem des ersten und des zweiten Satzes von Lichtquellen ausstrahlt;
wobei vorzugsweise der erste Satz von Lichtquellen einen ersten Abschnitt des transparenten Fensters beleuchtet und der zweite Satz von Lichtquellen einen zweiten Abschnitt des transparenten Fensters beleuchtet und der erste und der zweite Abschnitt sich mindestens teilweise überlappen, um Überlappungsbereiche bereitzustellen.

11. Bilderfassungsvorrichtung nach einem der Ansprüche 1 bis 10, wobei die mindestens eine Lichtquelle das transparente Fenster indirekt beleuchtet.

12. Bilderfassungsvorrichtung nach einem der vorhergehenden Ansprüche, wobei die mindestens eine Kamera eine Auflösung von mindestens 5 Megapixeln aufweist.

13. Bilderfassungsvorrichtung nach einem der vorhergehenden Ansprüche, die ferner eine Steuerung (218) umfasst, die zur Steuerung der Erfassung eines Bildes des auf der Bilderfassungsvorrichtung platzierten Reagenzglasgestells konfiguriert ist, wobei die Steuerung vorzugsweise konfiguriert ist zum:
Erhöhen der Lichtintensität des von der mindestens einen Lichtquelle emittierten Lichts;
Steuern der mindestens einen Kamera, um ein Bild des Reagenzglasgestells zu erfassen;
Verringern der Lichtintensität des von der mindestens einen Lichtquelle emittierten Lichts; und
Übertragen, über die Schnittstelle, des erfassten Bildes des Reagenzglasgestells an den Host-Computer.

14. Bilderfassungsvorrichtung nach einem der vorhergehenden Ansprüche, wobei der Spiegel ein erster Oberflächenspiegel ist.

15. System, Folgendes umfassend:
eine Bilderfassungsvorrichtung nach einem der vorhergehenden Ansprüche; und
einen Host-Computer (700), der mit der Bilderfassungsvorrichtung gekoppelt ist.

## Revendications

1. Dispositif de capture d'image (200) pour capturer une image de codes à barres d'une pluralité de tubes à essai (14) maintenus dans un support de tubes à essai (12), la pluralité des tubes à essai comportant chacun un code à barres individuel (302) sur celui-ci, le dispositif de capture d'image comprenant :
une enceinte (201) comprenant une fenêtre transparente (204) pour supporter le support de tubes à essai à reproduire en image, et
une pluralité d'éléments fixes non mobiles, la pluralité d'éléments fixes non mobiles comprenant :
au moins un appareil de prise de vues (206) monté à l'intérieur de l'enceinte pour capturer une image des codes à barres,
un agencement d'éclairage monté à l'intérieur de l'enceinte, l'agencement d'éclairage comprenant au moins une source de lumière (212) pour éclairer les codes à barres de la pluralité des tubes à essai maintenus dans le support de tubes à essai à travers la fenêtre transparente,
une interface (216) pour délivrer l'image capturée à un ordinateur hôte (700),
**caractérisé par**
un miroir (208) dans un trajet optique entre l'au moins un appareil de prise de vues et la fenêtre transparente, le miroir permettant de renvoyer des rayons de lumière réfléchis à partir des codes à barres de la pluralité des tubes à essai maintenus dans le support de tubes à essai vers l'au moins un appareil de prise de vues.

2. Dispositif de capture d'image selon la revendication 1, dans lequel le miroir est monté à l'intérieur de l'enceinte à un angle qui est égal ou supérieur à 10 degrés par rapport à la fenêtre transparente, et inférieur ou égal à 65 degrés par rapport à la fenêtre transparente,
optionnellement dans lequel le miroir est monté à l'intérieur de l'enceinte à un angle de 45 degrés par rapport à la fenêtre transparente.

3. Dispositif de capture d'image selon la revendication 1, dans lequel le miroir est monté à l'intérieur de l'enceinte à un angle qui est supérieur à 45 degrés et inférieur ou égal à 65 degrés par rapport à la fenêtre transparente.

4. Dispositif de capture d'image selon la revendication 1, dans lequel le miroir est monté à l'intérieur de l'enceinte à un angle qui est égal ou supérieur à 10 degrés et inférieur à 45 degrés par rapport à la fenêtre transparente.

5. Dispositif de capture d'image selon l'une quelconque des revendications précédentes, dans lequel l'au moins un appareil de prise de vues est positionné à une hauteur inférieure à la hauteur de la fenêtre transparente, dans lequel de préférence l'au moins un appareil de prise de vues est monté sur une ou une combinaison d'une base de l'enceinte, une paroi latérale de l'enceinte, et une partie du haut de l'enceinte qui entoure la fenêtre transparente.

6. Dispositif de capture d'image selon l'une quelconque des revendications précédentes, où le dispositif de capture d'image comprend en outre au moins un miroir fixe supplémentaire (218) dans le trajet optique entre l'au moins un appareil de prise de vues et la fenêtre transparente, l'au moins un miroir fixe supplémentaire, combiné avec ledit miroir, étant agencé pour renvoyer des rayons de lumière réfléchis par le support de tubes à essai vers l'au moins un appareil de prise de vues.

7. Dispositif de capture d'image selon l'une quelconque des revendications précédentes, dans lequel l'agencement d'éclairage est monté à l'intérieur de l'enceinte pour fournir un éclairage généralement uniforme à travers la fenêtre transparente entière et pour réduire des reflets indésirables.

8. Dispositif de capture d'image selon l'une quelconque des revendications précédentes, dans lequel l'enceinte comprend une paire de parois d'extrémité opposées (207, 209) et l'au moins une source de lumière est montée de façon adjacente à au moins une paroi d'extrémité, dans lequel de préférence une pluralité de sources de lumière sont placées de façon symétrique à l'intérieur de l'enceinte, les sources de lumière étant montées de façon adjacente aux deux parois d'extrémité.

9. Dispositif de capture d'image selon l'une quelconque des revendications précédentes, dans lequel le dispositif de capture d'image comprend en outre au moins un élément de blocage de lumière (214) agencé pour bloquer un sous-ensemble d'angles de rayon de lumière émis par l'au moins une source de lumière.

10. Dispositif de capture d'image selon l'une quelconque des revendications 1 à 7, dans lequel l'agencement d'éclairage comprend :
une pluralité de sources de lumière comprenant un premier ensemble de sources de lumière et un deuxième ensemble de sources de lumière montés à l'intérieur de l'enceinte pour éclairer directement la fenêtre, et
au moins un élément de blocage de lumière agencé pour bloquer un sous-ensemble d'angles de rayon de lumière émis à partir d'un seul du premier et du deuxième ensemble de sources de lumière,
dans lequel de préférence le premier ensemble de sources de lumière éclaire une première section de la fenêtre transparente et le deuxième ensemble de sources de lumière éclaire une deuxième section de la fenêtre transparente et les première et deuxième sections se chevauchent au moins partiellement pour fournir des régions de chevauchement.

11. Dispositif de capture d'image selon l'une quelconque des revendications 1 à 10, dans lequel l'au moins une source de lumière éclaire indirectement la fenêtre transparente.

12. Dispositif de capture d'image selon l'une quelconque des revendications précédentes, dans lequel l'au moins un appareil de prise de vues a une résolution d'au moins 5 mégapixels.

13. Dispositif de capture d'image selon l'une quelconque des revendications précédentes, comprenant en outre un dispositif de contrôle (218) qui est configuré pour contrôler une capture d'une image du support de tubes à essai placé sur le dispositif de capture d'image, dans lequel le dispositif de contrôle est configuré de préférence pour :
augmenter l'intensité de lumière émise par l'au moins une source de lumière,
contrôler l'au moins un appareil de prise de vues pour capturer une image du support de tubes à essai,
diminuer l'intensité de la lumière émise par l'au moins une source de lumière, et
transmettre, via ladite interface, l'image capturée du support de tubes à essai à l'ordinateur hôte.

14. Dispositif de capture d'image selon l'une quelconque des revendications précédentes, dans lequel le miroir est un premier miroir de surface.

15. Système comprenant :
un dispositif de capture d'image selon l'une quelconque des revendications précédentes, et
un ordinateur hôte (700) couplé au dispositif de capture d'image.
